# EUROPÄISCHE PATENTSCHRIFT

(11) **EP 1 163 778 B1**
(45) Veröffentlichungstag und Bekanntmachung des Hinweises auf die Patenterteilung: **09.11.2005**
(21) Anmeldenummer: 00926748.5
(22) Anmeldetag: 22.03.2000
(51) Int. Cl.: H04L 29/06, H04L 12/40

(54) **SCHALTUNGSANORDNUNG UND VERFAHREN ZUR KONFIGURATION EINER SCHNITTSTELLE VON EINER STEUERUNGS- ODER REGELUNGSEINRICHTUNG**
CIRCUIT SYSTEM AND METHOD OF CONFIGURING AN INTERFACE OF A CONTROL OR REGULATING DEVICE
CIRCUIT ET PROCEDE POUR CONFIGURER UNE INTERFACE DE DISPOSITIF DE COMMANDE OU DE REGULATION

(30) Priorität: 22.03.1999 DE 19912767; 29.02.2000 DE 10009366
(43) Veröffentlichungstag der Anmeldung: 19.12.2001
(73) Patentinhaber: Continental Teves AG & Co. oHG, 60488 Frankfurt am Main (DE)
(72) Erfinder: HAUPTMANN, Veith, D-63457 Hanau (DE); KERZ, Torsten, D-55270 Essenheim (DE); PIETSCH, Thomas, D-65843 Sulzbach/Ts. (DE); MROSS, Christoph, D-70376 Stuttgart (DE); MEYER, Michael, D-63674 Altenstadt (DE); UWE, Jocubeit, D-61462 Königstein/Ts. (DE)
(86) Internationale Anmeldenummer: PCT/EP2000/002514
(87) Internationale Veröffentlichungsnummer: WO 2000/056585

(56) Entgegenhaltungen:
- WO-A-98/54872
- US-A- 5 274 636
- US-A- 5 297 143
- US-A- 5 475 687

## Beschreibung

Die Erfindung betrifft eine Schaltungsanordnung zur Konfiguration einer Schnittstelle von einer Steuerungs- oder Regelungseinrichtung, insbesondere ein elektronischer Regler eines Fahrzeugregelungssystems, wie ABS, EBV, ASR oder ESP, zu einem Signalübertragungssystem, insbesondere ein serielles Fahrzeugbussystem, wie CAN-Bus, mit einem Schnittstellen-Baustein. Ferner betrifft die Erfindung ein Verfahren zur Konfiguration einer Schnittstelle von einer Steuerungs- oder Regelungseinrichtung, insbesondere ein elektronischer Regler eines Fahrzeugregelungssystems, wie ABS, EBV, ASR oder ESP, zu einem Signalübertragungssystem, insbesondere ein serielles Fahrzeugbussystem, wie CAN-Bus, bei dem die Schnittstelle mit Hilfe eines Schnittstellen-Bausteins für das Signalübertragungs-System erstellt wird und anpaßbar ist.

Durch die technische Entwicklung der Fahrzeuge, insbesondere Kraftfahrzeuge, ist in den letzten Jahren die Funktionalität, die Bedienungsfreundlichkeit, der Komfort und die Sicherheit, u. a. durch den Einsatz von elektronischen Steuerungs- oder Regelungsystemen, wie zum Beispiel Fahrsicherheitssysteme (Antiblockiersystem (ABS), Abtriebsschlupfregelung (ASR) oder Elektronische Bremskraftverteilung (EBV)), Fahrdynamikregelung (ESP), elektronische Motorsteuerung und Fahrerinformations- und Kommunikationssystem, wesentlich verbessert worden. Damit verbunden ist eine erhebliche Zunahme des Datenaustauschs zwischen den elektronischen Komponenten, was dazu führt, daß die Anzahl und Länge der elektrischen Leitungen des Leitungsnetzes sowie die Anzahl der elektrischen Steckverbindungen immer größer werden. Mit den herkömmlichen Verkabelungstechniken ist der geforderte Datenaustausch zwischen den einzelnen Steuergeräten und verschiedenen Endeinrichtungen, wie Bedienelemente, Sensoren und Verbraucher/Aktoren (z.B. Motoren, Ventile oder Anzeigeelemente) kaum mehr sinnvoll zu bewältigen.

Diese Probleme können durch die Verwendung von seriellen Bussystemen gelöst werden. Für den Einsatz in Kraftfahrzeugen wurden spezielle Bussysteme, insbesondere der sog."CAN-Bus" (Controller Area Network, beschrieben in ISO 11 519-2 und ISO 11 898), der sog. "SCP-Bus", der sog. "VAN-Bus" oder der sog. "J1850-Bus", entwickelt. Die Steuerungs- oder Regelungseinrichtungen, daß heißt insbesondere die Mikrorechner, in dem Bussystem kommunizieren dabei über Schnittstellen und den Bus mit den übrigen Systemkomponenten, wofür entsprechende Signalleitungen und elektronische/elektrische Baugruppen, wie Signalumsetzer, Sender, Empfänger und Steuerungseinrichtungen vorgesehen sind, die einzelne Signale oder Botschaften (Nachrichten, die mehrere Signale enthalten) erfassen oder ausgeben oder die elektrischen Verbraucher/Aktoren direkt ein- oder ausschalten.

Speziell für den Einsatz in Kraftfahrzeugen hat sich der CAN-Bus (vgl. WO-A-98/54872) als ein Standard durchgesetzt. Beim CAN-Bus sind mehrere gleichberechtigte Steuerungs- oder Regelungseinrichtungen durch eine lineare Busstruktur miteinander verbunden. Die Anbindung der einzelnen Teilnehmer an die Busstruktur erfolgt über einen Bus-Knoten. Ein Bus-Knoten besteht im wesentlichen aus der Steuerungs- oder Regelungseinrichtungen und einem Schnittstellen-Baustein (Interface-Controller).

Die Daten für eine individuelle Nachrichten- und Signalbearbeitung sowie die Initialisierungsparameter zur Schnittstellenkonfiguration sind fest implementiert in dem Steuerungs- oder Regelprogramm der Steuerungs- oder Regelungseinrichtung (Mikrorechner) selbst.

Nach Maßgabe der gespeicherten Daten für die individuelle Nachrichten- und Signalbearbeitung bzw. von Initialisierungsparametern für die Schnittstelle werden durch den Mikrorechner mit Hilfe des Schnittstellen-Bausteins zu Beginn die Betriebsart des Busses (Betriebsart der Ausgangstreiber und Zustand der Schnittstelle) eingestellt.

Eine Änderung der implementierten Schnittstellenkonfiguration ist nur mit einem relativ großen Aufwand möglich, daß bedeutet, es ist eine erneute Programmierung des Mikrorechners mit anschließendem Kompilieren und Linken des aktuellen Programms 2 erforderlich.

Aufgabe der Erfindung ist es, die bekannte Schaltungsanordnung und das bekannte Verfahren zur Konfiguration einer Schnittstelle von einer Steuerungs- oder Regelungseinrichtung, insbesondere ein elektronischer Regler eines Fahrzeugregelungssystems, zu einem Signalübertragungssystem, insbesondere ein Fahrzeugbussystem, wie CAN-Bus, zu verbessern und eine technisch einfach zu realisierende, flexible und sichere Neukonfiguration zu ermöglichen.

Die Aufgabe wird erfindungsgmäß gelöst durch die Merkmale der unabhängigen Patentansprüche 1 und 7.

Besonders vorteilhafte Weiterbildungen und Ausgestaltungen der Erfindung sind in den abhängigen Unteransprüchen angegeben.

Wesentlich an der Erfindung ist es, daß die Schaltungsanordnung einen ersten, von der Steuerungs- oder Regelungseinrichtung abhängigen Speicher mit einer ersten Signaltabelle aufweist, die Daten zur Beschreibung von im wesentlichen sämtlichen möglichen, dem Signalübertragungssystem über die Schnittstelle zur Verfügung gestellten Signalen enthält, und daß die Schaltungsanordnung einen zweiten, von der Steuerungs- oder Regelungseinrichtung unabhängigen Speicher mit einer zweiten Signaltabelle aufweist, welche die aktuellen Daten zur Beschreibung der aktuellen Schnittstelle enthält.

Die Signaltabellen sind somit erfindungsgemäß in zwei Bereiche gegliedert bzw. es sind zwei Signaltabellen vorgesehen: eine erste (interne) Signaltabelle und eine zweite (externe) Signaltabelle. Diese getrennten Tabellenbereiche oder Tabellen sind zwei getrennten Speichern oder Speicherbereichen zugeordnet. Der Vorteil der Erfindung liegt im wesentlichen darin begründet, daß der zweite Speicher bzw. die darin abgelegten Daten -im Gegensatz zu dem ersten Speicher- selbst nicht direkt in das aktuelle Programm der Steuerungs- oder Regelungseinrichtung eingebunden sind und somit im Grundsatz relativ leicht veränderbar oder anpaßbar sind.

Der Begriff "zwei getrennte Speicher" bedeutet im Sinne der Erfindung, daß sowohl zwei getrennte Speicherbausteine vorgesehen sind, als auch eine Trennung durch zwei getrennte Speicherbereiche in einem einzigen Speicherbaustein realisiert werden.

Dies hat den Vorteil, daß eine Aktualisierung der Daten in der zweiten Signaltabelle und damit eine Erstellung oder Anpassung einer Schnittstelle an ein vorgegebenes Signalübertragungssystem, insbesondere ein Fahrzeugbussystem, flexibel, rasch und technisch einfach erfolgen kann. So ist es zum Beispiel vorgesehen, leicht modifizierbare Speicher, wie RAM-Speicher (insbesondere gepufferte RAM-Speicher), Flash-Speicher oder EEPROM-Speicher als Bausteine für den zweiten Speicher einzusetzen.

Liegen die Daten in einem modifizierbaren Speicher vor, so ist eine Veränderung der Daten "offline" oder "Online" möglich.

Bei der hier mit dem Begriff "offline" bezeichneten Modifikation wird die Signaltabelle mit Hilfe einer Speicher-Konfigurationseinrichtung, vorzugsweise durch ein externes Programm, verändert. Das Ergebnis besteht aus Daten bzw. aus einer Tabelle in einer Sprache, die kompatibel ist zu der für das aktuelle Programm der Steuerungs- oder Regelungseinrichtung benutzten Programmiersprache. Diese Daten bzw. Tabelle wird anschließend durch Compilieren und Linken in das aktuelle Programm eingebunden. Anschließend muß das gesamte Programm, z.B. durch Download, in die Steuerungs- oder Regelungseinrichtung bzw. deren entsprechende Komponente, insbesondere Mikroprozessor, geladen werden.

Für eine als "online" bezeichnete Modifikation wird erfindungsgemäß durch eine Speicher-Konfigurationseinrichtung, vorzugsweise durch ein externes Programm, die Signaltabelle ebenfalls modifiziert. In diesem Fall besteht das Ergebnis aber aus Daten bzw. Tabellen in einer Form, z.B. einem Binärcode, welche direkt in den Speicher der Steuerungs- oder Regelungseinrichtung bzw. den Mikroprozessor geladen werden können. Eine Modifizierung der zweiten Signaltabelle in dem zweiten Speicher mittels Online-Modifikation ist erfindungsgemäß bevorzugt.

Es ist nach der Erfindung aber auch daran gedacht, mehrere, unterschiedliche Varianten der Signaltabellen in einem nicht-modifizierbaren Speicher, z.B. einem ROM, abzulegen und im Bedarfsfall eine bestimmte Variante auszuwählen. Diese Auswahl kann für die zweite Signaltabelle vorzugsweise ebenso online erfolgen.

Die erste Signaltabelle wird vorzugsweise bei der Erzeugung des Programmcodes für die Steuerungs- oder Regelungseinrichtung, daß bedeutet beim Compilieren und Linken, gebildet (Offline-Modifikation). Alle in dieser ersten Signaltabelle beschriebenen Signal können -aber müssen nicht- auf dem Signalübertragungssystem zur Verfügung gestellt werden. Die erste Signaltabelle kann durch eine Speicher-Konfigurationseinrichtung, vorzugsweise durch ein externes Programm, leicht verändert werden, z. B. durch Einfügen oder Entfernen von neuen Signalen. Die Änderungen werden erst bei erneutem Übersetzen und Linken in das aktuelle Programm 2 der Steuerungs- oder Regelungseinrichtung bzw. den Mikrorechner übernommen.

In der ersten Signaltabelle sind erfindungsgemäß für jedes Signal zumindest Daten für den Signaltyp (z.B. ein Timer für die Signale Setzen, Zurücksetzen oder Timer, eine bis zu 16 bit lange Zeichenkette für ein Signal, eine 1 bis 64 bit lange Zeichenkette für einen Block und/oder eine Konstante), für die Position (z.B. eine RAM-Adresse), für die Länge des Signals und für den Signalursprung (z.B. eine RAM-Adresse) und ein spezieller Name zur Beschreibung der Funktion des Signals enthalten.

Die zweite Signaltabelle enthält die aktuelle Schnittstellenbeschreibung und kann nachträglich leicht durch eine Konfigurationseinrichtung, vorzugsweise durch ein externes Programm, verändert werden. In der zweiten Signaltabelle sind zumindest Daten für die Initialisierung der Schnittstelle (z.B. eine Baudrate für die Übertragungsgeschwindigkeit und ein Bit-timing für die Schnittstellenkonfiguration), für die Art der gesendeten Nachrichten (z.B. eine zeitgesteuerte und/oder ereignisgesteuerte botschaftsspezifische Wiederholrate als Sende- und Empfangsraster) und für einen Typ der Botschaft (z.B. Sende- oder Empfangsbotschaft) sowie für die Anzahl der in der Nachricht enthaltenen Signale (z.B. für die Position und Länge des Signals innerhalb der Nachricht), und für die Zuordnung zu den Daten in der ersten Signaltabelle enthalten.

Die erfindungsgemäße Schaltungsanordnung und das erfindungsgemäße Verfahren sollen nun anhand von einer Abbildung (Fig.) beispielhaft näher erläutert werden.

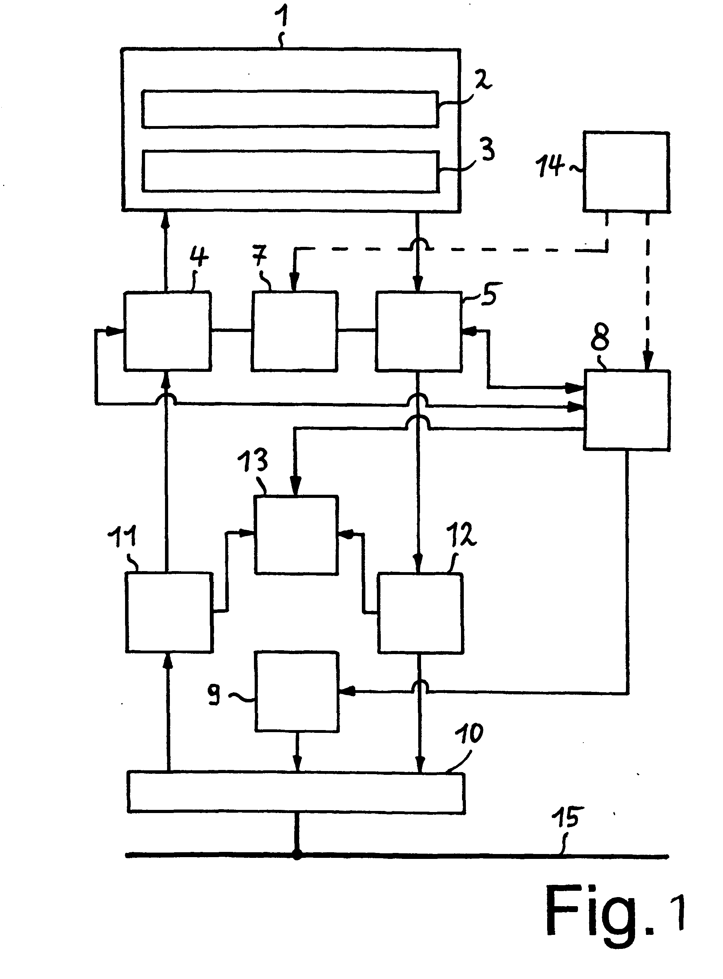

Die Fig. 1 zeigt schematisch eine erfindungsgemäße Ausführungsform der Schaltungsanordnung.

Die in der Fig. 1 dargestellte Schaltungsanordnung besteht aus einem elektronischer Regler eines Fahrzeugregelungssystems 1, der ein Programm 2 für die Fahrzeugregelung und ein diesem Programm 2 zugeordneten RAM-Speicher 3 enthält. Der RAM-Speicher steht in Verbindung mit einem Empfangskanal 4, zum Empfangen von Nachrichten, und einem Sendekanal 5, zum Senden von Nachrichten. Mit Hilfe des Empfangskanals 4 bzw. des Sendekanals 5 werden die empfangenen bzw. die zu sendenden Signale aufbereitet, ausgewählt und weiterverarbeitet. Der Empfangskanal 4 und Sendekanal 5 sind mit einem von der Steuerungs- oder Regelungseinrichtung abhängigen ersten Speicher 7 (interner Speicher) und einem unabhängigen zweiten Speicher 8 (externer Speicher) verbunden. Diese Speicher 7,8 können im Grundsatz auch als Speicherabschnitte eines Speichers realisiert werden (hier nicht dargestellt). In dem internen Speicher oder Speicherabschnitt 7 sind die zur Auswahl stehenden Signale in Form einer ersten (internen) Signaltabelle abgelegt und im externen Speicher 8 die Daten, mit welchen die Schnittstelle aktuell beschrieben wird (zweite oder externe Signaltabelle). Der externe Speicher 8 ist über eine Initialisierungseinheit 9 mit einem Schnittstellen-Baustein 10 verbunden. Der Schnittstellen-Baustein 10 steht über eine Empfangseinheit 11 und eine Sendeeinheit 12 in Verbindung mit dem Empfangskanal 4 und dem Sendekanal 5. Ferner ist eine Überwachungseinheit 13 angeordnet, die in Verbindung steht mit der Empfangseinheit 11 und Sendeeinheit 12 sowie dem externen Speicher 8. Der Inhalt des externen Speichers 8 ist im Bedarfsfall durch eine Speicher-Konfigurationseinrichtung 14, vorzugsweise durch ein externes Programm, veränderbar (getrichelter Pfeil). Der Schnittstellen-Baustein 10 steht in Verbindung mit einer Busleitung 15. Die nicht näher bezeichneten Pfeile stellen den wesentlichen Signalfluß bzw. die Datenübertragungsrichtung dieser Anordnung dar. Es ist erfindungsgemäß vorgesehen, daß alle Komponenten der beschriebenen Schaltungsanordnung, ausgenommen die Speicher 7 und 8 sowie der Schnittstellen-Baustein 10, durch ein Software-Programm realisiert werden.

Beim Senden einer Botschaft in das Bussystem werden alle dazugehörigen externen Signale, daß bedeutet Signale, welche in der Tabelle des externen Speichers 8 aufgelistet sind, durch den Sendekanal 5 der Reihe nach abgearbeitet. Dabei wird zuerst die Verknüpfung zu den in dem internen Speicher 7 abgelegten Daten für diese Signale durch den Sendekanal 5 analysiert. Anschließend wird das Signal in dem Sendekanal 5 entsprechend weiterverarbeitet oder eine entsprechende Funktion ausgeführt und gegebenenfalls das Ergebnis an entsprechender Stelle in der Botschaft abgelegt.

Jede zu sendende Nachricht enthält einen Sendetimer. Dieser Sendetimer wird durch die Sendeeinheit 12 in einem festen Zeitraster inkrementiert. Hat der Sendetimer einen in der externen Tabelle vorgegebenen Wert erreicht, wird die Nachricht mit den dazugehörigen Signalen durch die Sendeeinheit 12 gesendet. Gleichzeitig wird der Sendetimer wieder zurückgesetzt.

Es ist ebenso möglich, Nachrichten ereignisgesteuert zu senden. Dabei wird beim Eintritt eines durch das Programm 2 oder die Überwachungseinheit 13 hervorgerufenen Ereignisses die entsprechende Botschaft durch die Sendeeinheit 12 einmal gesendet. Das ereignisgesteuerte und das timergesteuerte Senden kann auch in Kombination zum Einsatz kommen. Bestimmte Nachrichten mit einem festen Senderaster können auch unabhängig von ihrer vorgesehenen Sendezeit bei einem bestimmten Ereignis sofort gesendet werden, beispielsweise in einem Störfall (z.B. Signal zum Einschalten einer Warnlampe im Störfall).

Beim Empfang einer Botschaft werden durch den Empfangskanal 4 die empfangenen Signale gemäß der in der ersten und zweiten Signaltabelle abgelegten Daten interpretiert. Sollte die Nachricht ein Signal mit dem Typ Timer besitzen, wird dieser auf einen in der ersten Signaltabelle definierten Wert gesetzt. Timer werden in einem festen Zeitraster dekrementiert und bei dem Wert Null (0) wird eine entsprechende Timeout-Funktion, daß bedeutet insbesondere bei Fehlereintrag oder Ausfall einer Nachricht, aufgerufen.

Mit Hilfe der Überwachungseinheit 13 erfolgt eine Überwachung im Hinblick auf einen Ausfall der Botschaft sowie auf permanente Übertragungsfehler. Die erkannten, spezifischen Fehler, daß bedeutet Fehler die sich auf andere Busknoten oder den gesamten Bus beziehen werden gespeichert.

Durch den Einsatz der Speicher-Konfigurationseinrichtung 14, vorzugsweise durch ein externes Programm, sind die Daten in der zweiten Signaltabelle sehr leicht verändern. Damit lassen sich die Schnittstellenparameter für die Kommunikation flexibel einstellen und durch ein geeignetes Software-Programm mit beispielsweise einer durchdachten Menüführung zur Parametereinstellung auch sehr bedienungsfreundlich verändern. Mit Hilfe dieses Programms werden die gewählten Schnittstellenparameter vorteilhaft in einen compilierbaren Code gewandelt. Das externe Programm kann vorteilhaft in einem transportablen Mikrocomputer (z.B. Laptop) gespeichert werden, so daß eine Modifikation vor Ort, z.B. bei einem Kraftfahrzeug direkt beim Kunden oder in einer Werkstatt, erfolgen kann.

Anschließend erfolgt der Austausch der zweiten Signaltabelle durch Download in den zweiten Speicher 8, der zum Beispiel als RAM-Speicher oder Flash-Segment ausgebildet ist. Auch ein Austausch der entsprechenden Speicherbausteine, beispielsweise EPROM-Speicher oder EEPROM-Speicher, ist denkbar. Ferner ist daran gedacht, daß in den genannten Speicherbausteinen auch verschiedene Sätze von der zweiten Signaltabelle vorhanden sein können und daß im Bedarfsfall eine entsprechende, gewünschte Signaltabelle ausgewählt und aktiviert wird.

Darüber hinaus ist es ebenso möglich, auch die interne, erste Signaltabelle mit Hilfe einer externen, vorzugsweise transportablen, Konfigurationseinrichtung zu modifizieren, wobei die Modifikation selbst offline erfolgt.

Der Vorteil der Erfindung liegt vor allem darin begründet, daß eine einfache und flexible Anpassung an eine vorhandene Kommunikations-Schnittstelle ohne eine direkte Modifikation des Programms, daß bedeutet der Steuerungs- oder Regelungssoftware, möglich ist, wobei die Implementierung der zweiten Signaltabelle sehr sicher auch online erfolgen kann. Die Daten im ersten Speicher stellen darüber hinaus vorteilhaft einen Signalpool dar, worin alle möglichen Signale beschrieben sind und wodurch dieser Signalpool als Standard für verschiedene Applikationen verwendet werden kann. So ist es möglich, die Kommunikations-Schnittstellen schnell und einfach zu erzeugen bzw. anzupassen, wobei Botschaften, Signale oder einzelne Signaldaten eingefügt, ausgeblendet oder gekapselt werden können.

## Patentansprüche

1. Schaltungsanordnung zur Konfiguration einer Schnittstelle von einer Steuerungs- oder Regelungseinrichtung (1), insbesondere ein elektronischer Regler eines Fahrzeugregelungssystems, wie ABS, EBV, ASR oder ESP, zu einem Signalübertragungssystem (15), insbesondere ein serielles Fahrzeugbussystem, wie CAN-Bus, mit einem Schnittstellen-Baustein (10),
**dadurch gekennzeichnet, daß** die Schaltungsanordnung einen ersten, von der Steuerungs- oder Regelungseinrichtung abhängigen Speicher (7) mit einer ersten Signaltabelle aufweist, die Daten zur Beschreibung von im wesentlichen sämtlichen möglichen, dem Signalübertragungssystem (15) über die Schnittstelle zur Verfügung gestellten Signalen enthält, und daß die Schaltungsanordnung einen zweiten, von der Steuerungs- oder Regelungseinrichtung unabhängigen Speicher (8) mit einer zweiten Signaltabelle aufweist, welche die aktuellen Daten zur Beschreibung der aktuellen Schnittstelle enthält.

2. Schaltungsanordnung nach Anspruch 1,
**dadurch gekennzeichnet, daß** die Daten in der zweiten Signaltabelle des zweiten Speichers (8) durch eine Speicher-Konfigurationseinrichtung (14), vorzugsweise durch ein externes Programm, leicht veränderbar sind.

3. Schaltungsanordnung nach Anspruch 1 oder 2,
**dadurch gekennzeichnet, daß** die Veränderungen der Daten in der ersten Signaltabelle des ersten Speichers (7) direkt in die Steuerungs- oder Regelungseinrichtung (1) implementiert werden bzw. direkt in ein aktuelles Programm (2) der Steuerungs- oder Regelungseinrichtung (1) übernommen werden.

4. Schaltungsanordnung nach einem der Ansprüche 1 bis 3, **dadurch gekennzeichnet, daß** in der ersten Signaltabelle des ersten Speichers (7) für jedes Signal zumindest Daten für den Signaltyp, die Position und die Länge des Signals sowie den Signalursprung enthalten sind.

5. Schaltungsanordnung nach einem der Ansprüche 1 bis 4, **dadurch gekennzeichnet, daß** in der zweiten Signaltabelle des zweiten Speichers (8) unabhängig von dem aktuellen Programm (2) der Steuerungs- oder Regelungseinrichtung (1) zumindest Daten für die Initialisierung der Schnittstelle, die Art und Anzahl der gesendeten Nachrichten, den Signaltyp, die Position und Länge des Signals innerhalb einer Nachricht, die Überwachungsinformationen und die Zuordnung zu den Daten in der ersten Signaltabelle enthalten sind.

6. Schaltungsanordnung nach einem der Ansprüche 1 bis 5, **dadurch gekennzeichnet, daß** der zweite Speicher (8) als leicht modifizierbare Speicher, zum Beispiel als RAM-Speicher, Flash-Speicher oder EEPROM-Speicher, ausgebildet sind.

7. Verfahren zur Konfiguration einer Schnittstelle von einer Steuerungs- oder Regelungseinrichtung (1), insbesondere ein elektronischer Regler eines Fahrzeugregelungssystems, wie ABS, EBV, ASR oder ESP, zu einem Signalübertragungssystem (1), insbesondere ein serielles Fahrzeugbussystem, wie CAN-Bus, bei dem die Schnittstelle mit Hilfe eines Schnittstellen-Bausteins (10) für das Signalübertragungs-System erstellt wird und anpaßbar ist,
**dadurch gekennzeichnet, daß** in einem, von der Steuerungs- oder Regelungseinrichtung abhängigen ersten Speicher (7) Daten abgelegt werden, die im wesentlichen sämtliche möglichen, dem Signalübertragungssystem (15) über die Schnittstelle zur Verfügung gestellten Signale beschreiben, und daß in einem, von der Steuerungs- oder Regelungseinrichtung (1) unabhängigen zweiten Speicher (8) Daten abgelegt werden, die die aktuelle Schnittstelle beschreiben.

8. Verfahren nach Anspruch 7,
**dadurch gekennzeichnet, daß** mit Hilfe der Daten der zweiten Signaltabelle zuerst der Schnittstellen-Baustein (10) initialisiert wird, daß anschließend beim Senden einer Botschaft an das Signalübertragungs-System (15) die zu sendenden Signale in dem zweiten Speicher (8), insbesondere der Reihe nach, abgearbeitet werden, wobei zuerst die Verknüpfung zu den in dem ersten Speicher (7) abgelegten Daten für diese Signale analysiert wird und anschließend das Signal entsprechend weiterverarbeitet wird oder eine entsprechende Funktion ausgeführt wird und
gegebenenfalls das Ergebnis an entsprechender Stelle in der Botschaft abgelegt wird, bevor die Signale über die Schnittstelle in das Signalübertragungs-System (15) gelangen, oder beim Empfangen einer Botschaft aus dem Signalübertragungs-System (15) die empfangenen Signale gemäß der Daten in der ersten und zweiten Signaltabelle interpretiert werden und gegebenenfalls weiterverarbeitet werden oder eine entsprechende Funktion ausgeführt wird und gegebenenfalls das Ergebnis an entsprechender Stelle dem aktuellen Programm (2) der Steuerungs- oder Regelungseinrichtung (1) direkt zugänglichen Speicher (3) abgelegt wird.

9. Verfahren nach Anspruch 8 oder 9,
**dadurch gekennzeichnet, daß** Daten in der zweiten Signaltabelle in einem RAM-Speicher, einem Flash-Speicher oder einem Flash-Segment abgelegt werden und durch einen Download neuer Daten ersetzt oder korrigiert werden oder daß Daten in der zweiten Signaltabelle in einem Speicherbausteins, wie EPROM-Speicher oder EEPROM-Speicher abgelegt werden und durch Austausch des Speicherbausteins, der neue Daten enthält, ersetzt oder korrigiert werden.

10. Verfahren nach einem der Ansprüche 7 bis 9,
**dadurch gekennzeichnet, daß** die zweite Signaltabelle mehrere Datensätze enthält, die gegebenenfalls selektiert werden und aktiviert werden zwecks Ersatz oder Korrektur der Schnittstelle.

11. Verfahren nach einem der Ansprüche 7 bis 12,
**dadurch gekennzeichnet, daß** die Daten in der ersten Signaltabelle ersetzt oder korrigiert werden, insbesondere durch eine Speicher-Konfigurationseinrichtung (14), vorzugsweise durch ein externes Programm, aber diese Veränderungen nicht direkt in die Steuerungs- oder Regelungseinrichtung (1) implementiert werden bzw. nicht direkt in ein aktuelles Programm (2) der Steuerungs- oder Regelungseinrichtung (1) übernommen werden und erst nach einem erneuten Compilieren und Linken des Steuer- oder Regelungsprogramms (2) oder zumindest eines Programmteils in das aktuelle Programm (2) der Steuerungs- oder Regelungseinrichtung (1) übernommen werden.

12. Verfahren nach einem der Ansprüche 7 bis 11,
**dadurch gekennzeichnet, daß** die Daten in der zweiten Signaltabelle ersetzt oder korrigiert werden, insbesondere durch eine Speicher-Konfigurationseinrichtung (14), vorzugsweise durch ein externes Programm, und direkt, vorzugsweise durch einen Download, in das aktuelle Programm (2) der Steuerungs- oder Regelungseinrichtung (1) übernommen werden.

## Claims

1. Circuit system for configuring an interface of a control or regulating device (1), especially an electronic controller of a vehicle control system, such as ABS, EBD, TCS, or ESP, to a signal transmission system (15), especially a serial vehicle bus system, such as a CAN bus, by an interface module (10),
**characterized in that** the circuit system includes a first memory (7) which depends on the control or regulating device and has a first signal table which contains data for describing substantially all possible signals which are provided to the signal transmission system (15) by way of the interface, and **in that** the circuit system includes a second memory (8) which is independent of the control or regulating device and has a second signal table which contains the current data for describing the current interface.

2. Circuit system as claimed in claim 1,
**characterized in that** the data in the second signal table of the second memory (8) is easy to modify by a memory configuration device (14), preferably by an external program.

3. Circuit system as claimed in claim 1 or 2,
**characterized in that** the modifications of the data in the first signal table of the first memory (7) are directly implemented into the control or regulating device (1) or are directly adopted in a current program (2) of the control or regulating device (1), respectively.

4. Circuit system as claimed in any one of claims 1 to 3,
**characterized in that** the first signal table of the first memory (7) includes for each signal at least data with respect to the signal type, the position and the length of the signal, and the signal origin.

5. Circuit system as claimed in any one of claims 1 to 4,
**characterized in that** the second signal table of the second memory (8), irrespective of the current program (2) of the control or regulating device (1), contains at least data for the initialization of the interface, the type and number of the messages transmitted, the signal type, the position and length of the signal within a message, the monitoring information, and the allocation to the data in the first signal table.

6. Circuit system as claimed in any one of claims 1 to 5,
**characterized in that** the second memory (8) is configured as a memory which can easily be modified, e.g. a RAM memory, flash memory, or EEPROM memory.

7. Method of configuring an interface of a control or regulating device (1), especially an electronic controller of a vehicle control system, such as ABS, EBD, TCS, or ESP, to a signal transmission system (1), especially a serial vehicle bus system, such as a CAN bus, wherein the interface is provided and adaptable by means of an interface module (10) for the signal transmission system,
**characterized in that** in a first memory (7), which depends on the control or regulating device, data is stored that describe substantially all possible signals which are provided to the signal transmission system (15) by way of the interface, and **in that** data describing the current interface is stored in a second memory (8) which is independent of the control or regulating device (1).

8. Method as claimed in claim 7,
**characterized in that** initially the interface module (10) is initialized by means of the data of the second signal table, **in that** subsequently during transmission of a report to the signal transmission system (15) the signals to be sent are processed in the second memory (8), in particular one after the other, wherein first the linking to the data for these signals stored in the first memory (7) is analyzed, and subsequently the signal is further processed accordingly, or a corresponding function is performed and, as the case may be, the result is stored at a corresponding location in the report before the signals are forwarded via the interface into the signal transmission system (15), or upon receipt of a report from the signal transmission system (15) the signals received are interpreted according to the data in the first and second signal table and processed, as the case may be, or a corresponding function is performed and, as the case may be, the result is stored at a corresponding location in the memory (3) which has direct access to the current program (2) of the control or regulating device (1).

9. Method as claimed in claim 8 or 9,
**characterized in that** data in the second signal table is stored in a RAM memory, a flash memory, or a flash segment and is replaced or corrected by a download of new data, or **in that** data is stored in the second signal table in a memory module, such as an EPROM memory or EEPROM memory, and is replaced or corrected by exchange of the memory module which contains new data.

10. Method as claimed in any one of claims 7 to 9,
**characterized in that** the second signal table contains several data records which are selected and activated, as the case may be, for the purpose of replacement or correction of the interface.

11. Method as claimed in any one of claims 7 to 12,
**characterized in that** the data in the first signal table is replaced or corrected, especially by a memory configuration device (14), preferably by an external program, but these modifications are not implemented directly into the control or regulating device (1) or are not adopted directly in a current program (2) of the control or regulating device (1), respectively, and are adopted in the current program (2) of the control or regulating device (1) only after a new compiling and linking of the control or regulating program (2) or at least a program part.

12. Method as claimed in any one of claims 7 to 11,
**characterized in that** the data in the second signal table is replaced or corrected, especially by a memory configuration device (14), preferably by an external program, and is adopted directly, preferably by a download, in the current program (2) of the control or regulating device (1).

## Revendications

1. Circuit pour la configuration d'une interface depuis un dispositif de commande ou de régulation (1), en particulier d'un régulateur électronique d'un système de régulation de véhicule, tel que ABS, EBV, ASR ou ESP, jusqu'à un système de transmission de signaux (15), en particulier un système de bus série de véhicule, tel qu'un bus CAN, comportant un composant d'interface (10),
**caractérisé en ce que** le circuit comporte une première mémoire (7), dépendant du dispositif de commande ou de régulation, avec un premier tableau de signaux qui contient des données pour la description d'essentiellement tous les signaux possibles, mis à disposition au système de transmission de signaux (15) par l'interface, et **en ce que** le circuit comporte une deuxième mémoire (8) dépendant du dispositif de commande ou de régulation avec un deuxième tableau de signaux qui contient les données actuelles pour la description de l'interface actuelle.

2. Circuit selon la revendication 1,
**caractérisé en ce que** les données du deuxième tableau de signaux de la deuxième mémoire (8) peuvent être facilement modifiées par un dispositif de configuration de mémoire (14), de préférence par un programme externe.

3. Circuit selon la revendication 1 ou 2,
**caractérisé en ce que** les modifications des données du premier tableau de signaux de la première mémoire (7) sont directement mises en oeuvre dans le dispositif de commande ou de régulation (1) ou sont directement reprises dans un programme actuel 2 du dispositif de commande ou de régulation (1).

4. Circuit selon l'une des revendications 1 à 3,
**caractérisé en ce que** dans le premier tableau de signaux de la première mémoire (7) sont contenues pour chaque signal au moins des données pour le type de signal, la position et la longueur du signal ainsi que l'origine du signal.

5. Circuit selon l'une des revendications 1 à 4,
**caractérisé en ce que** dans le deuxième tableau de signaux de la deuxième mémoire (8) sont contenus, indépendamment du programme actuel (2) du dispositif de commande ou de régulation (1), au moins des données pour l'initialisation de l'interface, le type et le nombre d'informations émises, le type de signal, la position et la longueur du signal à l'intérieur d'une information, les informations de surveillance et l'affectation aux données dans le premier tableau de signaux.

6. Circuit selon l'une des revendications 1 à 5,
**caractérisé en ce que** la deuxième mémoire (8) est conçue comme mémoire facilement modifiable, par exemple comme mémoire RAM, mémoire flash ou mémoire EEPROM.

7. Procédé de configuration d'une interface depuis un dispositif de commande ou de régulation (1), en particulier d'un régulateur électronique d'un système de régulation de véhicule, tel que ABS, EBV, ASR ou ESP, jusqu'à un système de transmission de signaux (1), en particulier un système de bus série de véhicule, tel qu'un bus CAN, dans lequel l'interface est réalisée et peut être adaptée à l'aide d'un composant d'interface (10) pour le système de transmission de signaux,
**caractérisé en ce que** dans une première mémoire (7), dépendant du dispositif de commande ou de régulation, sont enregistrées des données qui décrivent sensiblement tous les signaux possibles, mise à disposition au système de transmission de signaux (15) par l'interface, et **en ce que** dans une deuxième mémoire (8), dépendant du dispositif de commande ou de régulation (1), sont enregistrées des données qui décrivent l'interface actuelle.

8. Procédé selon la revendication 7,
**caractérisé en ce qu'**à l'aide des données du deuxième tableau de signaux on initialise d'abord le composant d'interface (10), **en ce qu'**ensuite, lors de l'émission d'un message au système de transmission de signaux (15), les signaux à émettre sont traités, en particulier dans l'ordre, dans la deuxième mémoire (8), la corrélation aux données enregistrées dans la première mémoire (7) pour ces signaux étant d'abord analysée, puis le signal étant retraité en conséquence ou une fonction correspondante étant exécutée et éventuellement le résultat étant consigné en un emplacement approprié dans le message avant que les signaux ne parviennent, par l'interface, dans le système de transmission de signaux (15), ou **en ce que** lors de la réception d'un message provenant du système de transmission de signaux (15), les signaux reçus sont interprétés suivant les données du premier et du deuxième tableau de signaux, et sont éventuellement retraités, ou une fonction est exécutée et éventuellement le résultat est consigné en un emplacement approprié de la mémoire (3) directement accessible au programme actuel 2 du dispositif de commande ou de régulation (1).

9. Procédé selon la revendication 8 ou 9,
**caractérisé en ce que** des données du deuxième tableau de signaux sont enregistrées dans une mémoire RAM, une mémoire flash ou un segment flash, et remplacées ou corrigées par téléchargement de nouvelles données, ou **en ce que** des données du deuxième tableau de signaux sont enregistrées dans un composant de mémoire, tel qu'une mémoire EPROM ou mémoire EEPROM, et sont remplacées ou corrigées par échange du composant de mémoire qui contient de nouvelles données.

10. Procédé selon l'une des revendications 7 à 9,
**caractérisé en ce que** le deuxième tableau de signaux contient plusieurs jeux de données qui sont éventuellement sélectionnés et activés pour remplacement ou correction de l'interface.

11. Procédé selon l'une des revendications 7 à 12,
**caractérisé en ce que** les données du premier tableau de signaux sont remplacées ou corrigées, en particulier par un dispositif de configuration de mémoire (14), de préférence par un programme externe, mais ces modifications ne sont pas mises en oeuvre directement dans le dispositif de commande ou de régulation (1) ni reprises directement dans un programme (2) actuel du dispositif de commande ou de régulation (1), et ne sont reprises dans le programme actuel 2 du dispositif de commande ou de régulation (1) qu'après nouvelle compilation et liaison du programme de commande ou de régulation (2) ou au moins d'une partie de programme, dans le programme actuel 2 du dispositif de commande ou de régulation (1).

12. Procédé selon l'une des revendications 7 à 11,
**caractérisé en ce que** les données du deuxième tableau de signaux sont remplacées ou corrigées, en particulier par un dispositif de configuration de mémoire (14), de préférence par un programme externe, et sont directement reprises, de préférence par un téléchargement, dans le programme actuel 2 du dispositif de commande ou de régulation (1).
